# EUROPÄISCHE PATENTSCHRIFT

(11) **EP 3 129 209 B1**
(45) Veröffentlichungstag und Bekanntmachung des Hinweises auf die Patenterteilung: **21.07.2021**
(21) Anmeldenummer: 15714808.1
(22) Anmeldetag: 07.04.2015
(51) Int. Cl.: B29C 67/00

(54) **VORRICHTUNG SOWIE VERFAHREN ZUM ERSTELLEN VON VOLUMENKÖRPERN**
DEVICE AND METHOD FOR PRODUCING THREE-DIMENSIONAL OBJECTS
DISPOSITIF ET UN PROCÉDÉ DE CRÉATION DE CORPS SOLIDES

(30) Priorität: 07.04.2014 DE 102014206697
(43) Veröffentlichungstag der Anmeldung: 15.02.2017
(73) Patentinhaber: HOMAG GmbH, 72296 Schopfloch (DE); HOMAG Bohrsysteme GmbH, 33442 Herzebrock-Clarholz (DE)
(72) Erfinder: FLIK, Markus, 70193 Stuttgart (DE); BETTERMANN, Thomas, 33699 Bielefeld (DE)
(74) Vertreter: Hoffmann Eitle
(86) Internationale Anmeldenummer: PCT/EP2015/057468
(87) Internationale Veröffentlichungsnummer: WO 2015/155164

(56) Entgegenhaltungen:
- DE-A1- 10 148 967
- JP-A- 2006 247 989
- US-A1- 2004 089 980
- US-A1- 2008 280 028
- US-A1- 2013 108 726
- Canale di CNCmachinable: "Multiax CNC paste extrusion", YouTube , 9. März 2012 (2012-03-09), XP054975903, Gefunden im Internet: URL:https://www.youtube.com/watch?v=4Af8S- suDaU [gefunden am 2015-06-04]

## Beschreibung

### Technisches Gebiet

Die vorliegende Erfindung betrifft eine Vorrichtung sowie ein Verfahren zum Erstellen von dreidimensionalen Volumenkörpern. Bei den genannten Volumenkörpern kann es sich insbesondere um Elemente aus der Möbel- bzw. Bauelementeindustrie handeln.

### Stand der Technik

Es ist die WO 2013/180609 A1 bekannt, die ein Verfahren sowie eine Vorrichtung zum schichtweisen Ausbilden eines Gegenstands betrifft. Das schichtweise Ausbilden von Körpern fällt in den Bereich der generativen Verfahren und kann dem sogenannten 3D-Drucken zugeordnet werden.

Im Rahmen des genannten Verfahrens werden ein Masseelement, ein Bindemittel und zumindest ein Verstärkungselement verwendet. Beim Masseelement kann es sich z.B. um Holzstaub handeln. Auch Holzspäne, die aus der Verarbeitung von Holz stammen, Sägestaub oder Hobelspäne können zum Einsatz kommen. Die Verwendung von Holzstaub ist deshalb vorteilhaft, weil Holzstaub bei geringen Kosten verfügbar ist. Auch ökologische Aspekte spielen hier eine Rolle, denn biologisch abbaubares Material ist deutlich umweltverträglicher als andere auf dem Gebiet des 3D-Druckens verwendete Materialien, wie beispielsweise Kunstharze. Als Bindemittel kann bei dem hier genannten Verfahren auch Holzleim eingesetzt werden.

Die über das bekannte Verfahren herstellbaren Artikel betreffen auch Elemente aus der Möbelindustrie, wie z.B. Regale, Tische oder Stühle.

Als weiteres Dokument zeigt die US 6,284,838 A1 eine biologisch abbaubare Zusammensetzung aus Lignin oder einem ligninhaltigen Material und einem Protein. Das Lignin oder ligninhaltige Material wird mit dem Protein zusammen erhitzt und eingeschmolzen. Als ligninhaltiges Material können auch feine Holzpartikel eingesetzt werden.

Ferner ist die EP 2 636 512 A2 bekannt, die ein Verfahren zum schichtweisen Aufbau eines Formkörpers aus aushärtendem Material betrifft. Holzleim und andere Binder auf natürlicher Basis stehen hierzu zur Verfügung. Auch ist Holzmehl ein unter Umständen geeignetes Füllmaterial.

Die DE 2011 015 068 A1 zeigt eine Vorrichtung sowie ein Verfahren zum schichtweisen Aufbau eines Muster- oder Serienprodukts. Als Füllstoff ist vorzugsweise eine leichte Schaumfraktion definierter Partikelgröße und definierter Dichte in Gestalt von Kügelchen vorgesehen. Als Füllstoffe sind jedoch auch anorganische Stoffe, wie beispielsweise Holz oder Zellulose geeignet.

Als weiteres Dokument ist die JP 2006-247989 bekannt, die eine Vorrichtung zum Herstellen eines dreidimensionalen Gegenstandes zeigt, wobei in einem ersten Schritt geschäumtes Polysterol einer Schneidbearbeitung überzogen wird, und in einem zweiten Schritt auf der Fläche des geschäumten Polysterols, das im ersten Schritt der Schneidbearbeitung überzogen wurde, ein Formmaterial aufgebracht wird.

Die DE 101 48 967 A1 beschreibt eine Vorrichtung zur Ausbildung von Volumenkörpern, die ein Bearbeitungswerkzeug, eine Zuführeinrichtung und eine Auftragseinheit umfasst. Des Weiteren sind ein Pulver-Tank zur Aufnahme des Werkstoffs sowie eine Absaugvorrichtung, welche bei der Bearbeitung anfallendes Material aufnimmt, vorgesehen.

### Gegenstand der Erfindung

Es ist ein Ziel der vorliegenden Erfindung, eine Vorrichtung sowie ein Verfahren bereitzustellen, um die industrielle Anwendbarkeit eines generativen Verfahrens zu fördern und eine kosteneffektive Umsetzung zu ermöglichen.

Hierzu stellt die vorliegende Erfindung eine Vorrichtung gemäß Anspruch 1 sowie ein Verfahren gemäß Anspruch 10 bereit. Weitere bevorzugte Ausführungsformen sind in den abhängigen Ansprüchen aufgeführt.

"Auftragseinheit" im Sinne dieser Anmeldung ist auf jegliche Einrichtung gerichtet, mit der ein generatives Verfahren zur Ausbildung von Volumenkörpern durchgeführt werden kann. Beispielsweise wird ein pulverförmiges Ausgangsmaterial in einer Schicht aufgetragen und unter Energieeintrag in definierten Bereichen mit einer darunterliegenden Schicht verbunden oder verschmolzen.

Der Begriff "Volumenkörper" ist dabei als ein struktureller Körper zu verstehen, dessen Dimensionen über eine Beschichtung bestehend aus einem flüssigen oder festen Beschichtungsmaterial oder einer bedruckten Oberfläche hinausgehen. Insbesondere soll der Volumenkörper eine Dicke von mindestens 500µm aufweisen.

Bei dem additiven Werkstoff zum Ausbilden von Volumenkörpern handelt es sich um ein Holzmaterial, insbesondere Holzschaum, Holzmehl, Schleifstaub, Sägespäne, Zellulose oder ähnliches.

Erfindungsgemäß umfasst die Vorrichtung eine Speichereinrichtung zur Aufnahme des Werkstoffs, die mit der Zuführeinrichtung verbunden ist. Ferner ist erfindungsgemäß eine Absaugvorrichtung vorgesehen, welche bei der Bearbeitung einer Bearbeitungsmaschine anfallendes Material aufnimmt, das der Speichereinrichtung zugeführt wird.

Erfindungsgemäß handelt es sich bei der Speichereinrichtung um eine Aufbereitungsanlage, in der der mit einer Auftragseinheit zu verarbeitende, additive Werkstoff für die Verarbeitung aufbereitet und zwischengelagert. Das Aufbereiten betrifft das Vermischen zweier Komponenten. Beispielsweise kann ein Holz-Alu-Gemisch erzeugt werden, oder dem Grundmaterial wird ein Farbstoff, Leimstoff, Härter und/oder eine Aktivierungskomponente beigemischt. Die genannte Aktivierungskomponente wird durch Einbringung von Energie, beispielsweise Heißluft, Laserlicht, UV-Strahlung in angeregt. Dabei wird das Grundmaterial oder ein ebenfalls beigemischtes Haftmittel an- oder aufgeschmolzen und entfaltet eine adhäsive Wirkung. Auf diese Weise wird der additive Werkstoff aufbereitet und kann der Verarbeitung zugeführt werden.

In einer weiteren Ausführungsform umfasst die Vorrichtung ferner eine Beschichtungsvorrichtung, insbesondere eine Inkjet-Druckeinrichtung, mit der Werkstücke und/oder durch die Auftragseinheit ausgebildete Formen bedruckt oder mit Lack versehen werden können. Auf diese Weise kann in einer Maschine ein mittels der Auftragseinheit hergestelltes Werkstück bzw. Bauteil nachbearbeitet werden.

Ferner kann die Vorrichtung ein Veredelungsaggregat umfassen, insbesondere eine Heizeinrichtung, einen UV-Strahler, eine Vorrichtung zum Kantenanleimen, Extrudieren und Beschichten, Kaschieren, Reinigen, Entfetten, Verbessern der Haftungs- und Benetzungseigenschaften und Vermindern der elektrostatischen Aufladung. Somit können die Oberflächen- und Tiefeneigenschaften von mittels der Auftragseinheit hergestellten Werkstücken bzw. Bauteilen gezielt optimiert werden.

Zusätzlich oder alternativ kann der Auftragseinheit ein Vorbehandlungsmodul zugeordnet sein, mit dem ein als Trägerwerkstück dienendes Werkstück einem oder mehreren Vorbehandlungsschritten unterzogen wird, wobei das Vorbehandlungsmodul bevorzugt ein oder mehrere Module aufweist, die ausgewählt sind aus einem Vorreinigungsmodul, einem Entfettungsmodul, einem Modul zum Verbessern der Haftungs- und Benetzungseigenschaften sowie einem Modul zum Vermindern der elektrischen Aufladung. Auf diese Weise können die Qualitätsansprüche in positiv beeinflusst werden.

In einer Modifikation umfasst die Vorrichtung eine Prägeplatte, mit der die durch die Auftragseinheit ausgebildete Volumenkörper mit einer Struktur versehen wird. Dies wird durch Druck, ggf. in Kombination mit einem Wärmeeintrag erfolgen.

Die Auftragseinheit ist bevorzugt entlang einer insbesondere linearen Führung verfahrbar ist, bevorzugt horizontal und vertikal. Dies erhöht die Einsatzmöglichkeiten der Auftragseinheit deutlich.

Ferner kann die Auftragseinheit selbst einen Speicher umfassen, der den zu verarbeitenden additiven Werkstoff aufnimmt. Dieser Speicher kann zusätzlich zum zuvor genannten Speicher vorgesehen sein. Auch ist es möglich, den Speicher kontinuierlich über einen Zuführkanal oder taktweise mit dem additiven Werkstoff zu befüllen.

In einer besonders bevorzugten Variante ist die Auftragseinheit in eine Werkzeugaufnahme, insbesondere aus einem Werkzeugspeicher, einwechselbar ist. Bei der Werkzeugaufnahme kann es sich um eine Spindeleinheit handeln, in die üblicherweise ein Bearbeitungswerkzeug wie ein Fräser eingewechselt wird. Somit kann die Auftragseinheit wie ein Bearbeitungswerkzeug, wie ein Fräser, behandelt werden.

Wird die Auftragseinheit gar in einem Werkzeugspeicher/- magazin zwischengespeichert, kann in der Werkzeugaufnahme alternativ ein Bearbeitungswerkzeug oder die Auftragseinheit zum Einsatz kommen. Dies erweitert die Möglichkeiten der Vorrichtung radikal.

In einer weiteren Variante sind das Bearbeitungswerkzeug und die Auftragseinheit an einem gemeinsamen Schlitten angebracht, der entlang der Führung verfahrbar ist.

Alternativ hierzu ist es möglich, das Bearbeitungswerkzeug und die Auftragseinheit auf getrennten Schlitten an einem gemeinsamen Ausleger oder Portal anzubringen.

Ferner betrifft die vorliegende Erfindung ein Verfahren zum Ausbilden von Volumenkörpern unter Einsatz einer Vorrichtung, bei dem die Vorrichtung ein Bearbeitungswerkzeug zur bevorzugt abtragenden, insbesondere spanenden, Bearbeitung von Werkstücken, ein Zuführeinrichtung zur Zuführung eines additiven Werkstoffs, und eine Auftragseinheit aufweist, bei welchem Verfahren ein Volumenkörper mittels der Auftragseinheit aus dem Werkstoff ausgebildet wird und mittels des Bearbeitungswerkzeugs eine Bearbeitung durchgeführt wird.

### Kurze Beschreibung der Zeichnungen

- Fig. 1: ist eine perspektivische Ansicht einer ersten Ausführungsform der vorliegenden Erfindung.
- Fig. 2: ist eine Draufsicht auf die in Figur 1 dargestellte erste Ausführungsform der vorliegenden Erfindung.
- Fig. 3: ist eine weitere Darstellung der ersten Ausführungsform.
- Fig. 4: zeigt eine zweite Ausführungsform der vorliegenden Erfindung.
- Fig. 5: zeigt eine Modifikation der in Fig. 4 dargestellten zweiten Ausführungsform.
- Fig. 6: ist eine perspektivische Ansicht, die eine dritte Ausführungsform der vorliegenden Erfindung zeigt.
- Fig. 7: ist eine weitere Ansicht der in Fig. 6 dargestellten dritten Ausführungsform.

### Bevorzugte Ausführungsformen der vorliegenden Erfindung

Nachfolgend werden anhand der beigefügten Figuren bevorzugte Ausführungsformen der vorliegenden Erfindung im Detail erläutert. Einzelne Merkmale oder Modifikationen der jeweiligen Ausführungsformen können jeweils mit anderen Ausführungsformen kombiniert werden, um neue Ausgestaltungen der vorliegenden Erfindung auszubilden.

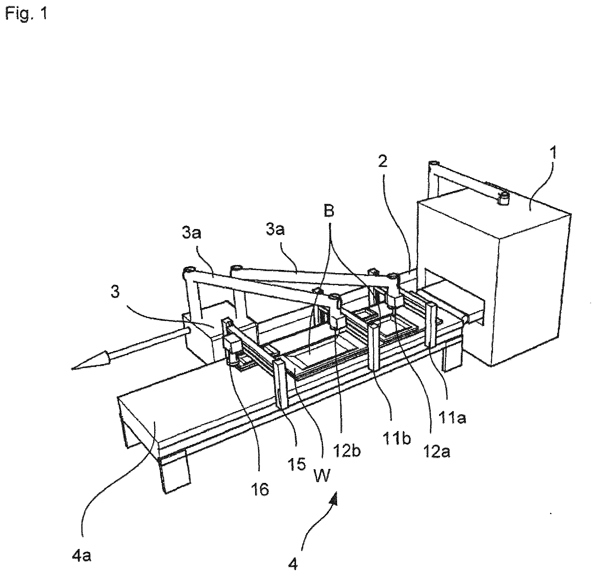

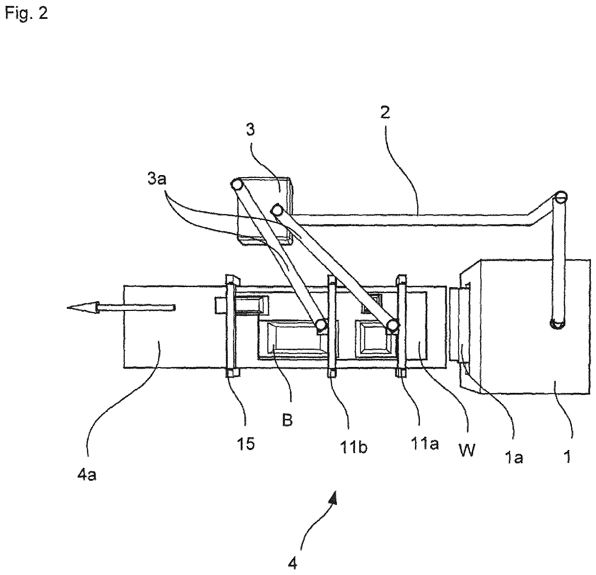

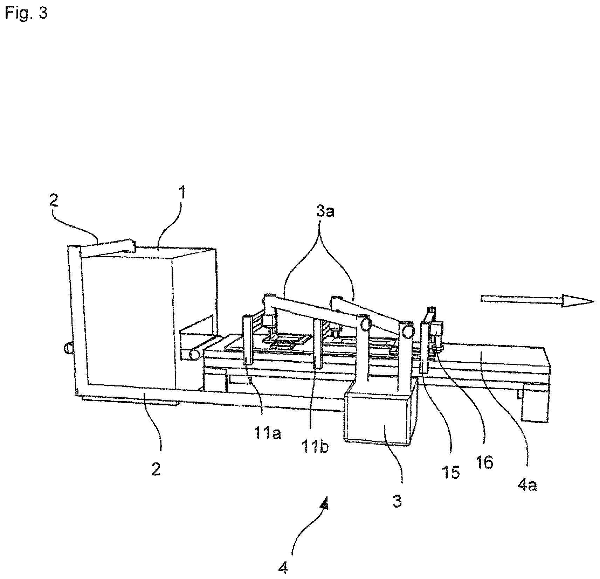

Figuren 1-3 zeigen eine erste Ausführungsform der vorliegenden Erfindung. Diese ist als Fertigungsstraße ausgebildet, und umfasst eine Schleifmaschine 1 sowie eine Vorrichtung 4 zum Ausbilden von Volumenkörpern. Die Bewegungsrichtung der Werkstücke ist in den Figuren 1-4 durch einen Pfeil angedeutet.

An der Beschickungsseite der Fertigungsstraße befindet sich die Schleifmaschine 1, welche ein Förderband 1a umfasst, mit dem ein Werkstück W durch die Schleifmaschine 1 gefördert wird. Die Schleifmaschine 1 erzeugt bei der Bearbeitung der Ober- und/oder Unterseite des Werkstücks W Schleifstaub, der über eine in der Schleifmaschine 1 vorgesehene Absaugvorrichtung vom Werkstück und/oder vom Schleifband entfernt wird.

In Durchlaufrichtung der Schleifmaschine 1 nachgeordnet befindet sich die Vorrichtung 4 zum Ausbilden von Volumenkörpern. Diese umfasst eine Werkstückaufnahmefläche 4a, die beispielsweise ebenfalls als Förderband ausgebildet ist. Dabei ist die Werkstückaufnahmefläche 4a im Wesentlichen in der gleichen, horizontal ausgerichteten Ebene wie das Förderband 1a der Schleifmaschine 1 vorgesehen.

Der mittels einer Absaugvorrichtung in der Schleifmaschine 1 abgesaugte Schleifstaub wird über einen Absaugkanal 2 von der Schleifmaschine 1 zu einer Aufbereitungsanlage 3 (Speichereinrichtung) geführt. Die Aufbereitungsanlage 3 ist neben der Vorrichtung 4 angeordnet, und dient dazu, den durch den Absaugkanal 2 zugeführten Schleifstaub zwischenzuspeichern (zu puffern). Ferner kann die Aufbereitungsanlage 3 Mittel umfassen, mit denen der Schleifstaub aufbereitet wird.

Solche Aufbereitungseinrichtungen beinhalten beispielsweise eine Reinigungsvorrichtung, um Werkstoffanteile zu filtern, welche beim Schleifvorgang vom Werkstück W entfernt, jedoch für die nachfolgende Bearbeitung nicht verwendet werden können (zum Beispiel Lacksplitter, Schmiermittel, Kleberreste oder ähnliches). Auch ist es möglich, dass Schleifkörner der Schleifbänder oder in der Umgebung vorliegende Verunreinigungen in den Absaugkanal 2 gelangen können, welche ebenfalls vom Holzmaterial des Schleifstaubs getrennt werden sollen.

Allerdings wird darauf hingewiesen, dass derartige Reinigungsvorrichtungen unter Umständen dann nicht erforderlich sind, wenn der Aufbereitungsanlage 3 bereits ein relativ reiner Holzwerkstoff zugeführt wird. In diesem Fall beinhaltet das "Aufbereiten" des Schleifstaubs primär dessen Zwischenlagerung vor der Weiterverarbeitung.

Auch ist es möglich, dass in der Aufbereitungsanlage 3 unterschiedliche Holzmaterialien gemischt werden. So kann ein Anteil an Recyclingmaterial und ein Anteil an Neumaterial bereitgestellt werden. Ferner kann es vorgesehen sein, für bestimmte optische Ansprüche unterschiedliche Holztypen zu mischen.

Ferner kann die Aufbereitungsanlage 3 in einer Variante der dargelegten Ausführungsform eine Einrichtung umfassen, mit der weitere Komponenten dem in die Aufbereitungsanlage 3 zugeführten Material beigemischt werden. Auf diese Weise wird eine Materialkombination bereitgestellt.

Die in diesem Fall in der Aufbereitungsanlage 3 zumindest eine beigefügte Komponente ist ein Material, das sich vom Holzmaterial unterscheidet. Beispielsweise kann ein Holz-Alu-Gemisch oder Holz-Kohlefaser-Gemisch erzeugt werden, oder dem Holzmaterial wird ein Farbstoff, Leimstoff, Härter und/oder eine Aktivierungskomponente beigemischt.

Die genannte Aktivierungskomponente wird durch Einbringung von Energie, beispielsweise Heißluft, Laserlicht, UV-Strahlung in einen aktiven Zustand versetzt. Dabei wird das Grundmaterial oder ein ebenfalls beigemischtes Haftmittel an- oder aufgeschmolzen und kann danach aushärten.

Die beigefügte Komponente kann granulatförmig, staubpartikelförmig, fadenförmig oder auch flüssig in die Aufbereitungsanlage eingebracht werden. Ferner ist es möglich, die beizufügende Komponente in der Gasphase in die Aufbereitungsanlage 3 einzubringen.

Die beigefügte Komponente kann unter gewissen Umständen ein detektierbares Signal ausgegeben, insbesondere ein optisches, physikalisches oder chemisches Signal. Dieses Signal kann mit einem Sensor erfasst werden. Auf diese Weise können zusätzliche Informationen über das in der Aufbereitungsanlage 3 vorgehaltene Material in das herzustellende Produkt übertragen werden. Alternativ oder zusätzlich können die Informationen auch bei der Weiterverarbeitung gezielt genutzt werden.

Die Aufbereitungsanlage 3 steht mittels Förderkanälen 3a, 3a mit Auftragseinheiten 12a, 12b in Verbindung, die das zu verarbeitende Material (in der vorliegenden Ausführungsform Holzmaterial aus Schleifstaub) von der Aufbereitungsanlage 3 zur entsprechenden Auftragseinheit 12a, 12b zuführen. Die Förderkanäle 3a, 3a sind flexible Schläuche, so dass die Bewegbarkeit der Auftragseinheiten 12a, 12b nicht gestört wird.

Die Auftragseinheiten 12a, 12b sind in Durchlaufrichtung nacheinander angeordnet, und werden an einer Linearführung eines in portalbauweise ausgeführten Ständers 11a, 11b quer zur Durchlaufrichtung geführt. Eine Zustellung in der vertikalen Richtung ist ebenfalls vorgesehen.

Den Auftragseinheiten 12a, 12b nachgeordnet ist ein Bearbeitungswerkzeug 16, beispielsweise ein Fräser oder Bohrer, das über einen Ständer 15 beweglich getragen wird. Dabei ist das Bearbeitungswerkzeug 16 quer zur Durchlaufrichtung entlang einer Linearführung des Ständers 15 verfahrbar, und kann in vertikaler Richtung zugestellt werden.

Die Ständer 11a, 11b sowie 15 können sowohl stationär am Maschinenbett der Vorrichtung 4 befestigt, als auch entlang des Maschinenbetts der Vorrichtung 4 (in Durchlaufrichtung) verfahrbar sein. Ferner können die Ständer 11a, 11b, 15 statt als Portal jeweils auch als Ausleger ausgeführt sein.

Ein beispielhafter Verfahrensablauf der vorliegenden Ausführungsform stellt sich wie folgt dar.

Zunächst wird ein Werkstück W in die Schleifmaschine 1 eingebracht, und mittels des Förderbands 1a durch die Schleifmaschine 1 bewegt. Dabei wird die Ober- und/oder Unterseite des Werkstücks W mit einem oder mehreren Schleifbändern bearbeitet, und der bei der Bearbeitung entstehende Schleifstaub über die Aufbereitungsanlage 3 den Auftragseinheiten 12a, 12b zugeführt.

Das auf der Schleifmaschine 1 gelangende Werkstück W dient nachfolgend als Trägerplatte. Dabei werden durch die Auftragseinheiten 12a, 12b dreidimensionale Strukturen auf dem Werkstück W ausgebildet, insbesondere durch schichtweises Auftragen eines Holzmaterials.

Parallel oder nachfolgend wird das mit den dreidimensionalen Strukturen versehene Werkstück W mit dem Bearbeitungswerkzeug 16 nachbearbeitet. Dies betrifft beispielsweise das Einbringen von Bohrungen, oder ein Abtragen des durch die Auftragseinheiten 12a, 12b aufgebrachten Materials, um Radien oder andere Strukturen in diesem Bereich auszubilden. Anschließend kann das derart mit dreidimensionalen Strukturen versehene Werkstück W von der Vorrichtung 4 entnommen werden.

In Figuren 1-3 werden die genannten dreidimensionalen Strukturen mit den Bezugszeichen B versehen. Denn es ist ersichtlich, dass statt des Werkstücks W einzelne Bauteile B (dreidimensionale Strukturen) mittels der Auftragseinheiten 12a, 12b ausgebildet werden können. Dies kann mit oder ohne Trägerplatte erfolgen.

Ferner ist ersichtlich, dass die vorliegende Ausführungsform nicht auf eine bestimmte Anzahl von Auftragseinheiten 12a, 12b oder Bearbeitungswerkzeuge 16 beschränkt ist. Vielmehr kann die Vorrichtung 4 lediglich eine Auftragseinheit 12a umfassen, ohne dass in der Vorrichtung 4 ein weiteres Bearbeitungswerkzeug 16 vorgesehen ist.

Auch kann in der Durchlaufrichtung ein weiteres Bearbeitungswerkzeug der Auftragseinheit 12a vorangestellt sein, um am Werkstück W, das mit den dreidimensionalen Strukturen zu versehen ist, vorab Bearbeitungsvorgänge durchzuführen.

In einer weiteren Modifikation der vorliegenden Ausführungsform ist der Auftragseinheit 12a mindestens ein Bearbeitungswerkzeug vor- und nachgeordnet.

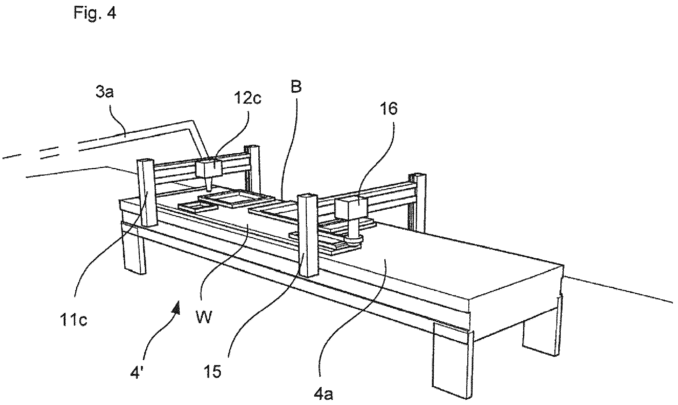

Fig. 4 zeigt eine zweite Ausführungsform der vorliegenden Erfindung. Die Vorrichtung 4' umfasst eine Auftragseinheit 12c, welche entlang einer linearen Führung eines in Portalbauweise ausgeführten Ständers 11c beweglich ausgebildet ist. Auch kann die Auftragseinheit 12c in vertikaler Richtung verfahren werden.

Die Auftragseinheit 12c ist mit einem Förderkanal 3a in Verbindung. Dieser führt ein zu verarbeitendes Holzmaterial von einer in Fig. 4 nicht dargestellten Aufbereitungsanlage (Speicher) zu. Die Aufbereitungsanlage gemäß der zweiten Ausführungsform kann ähnlich ausgeführt sein wie bereits in der ersten Ausführungsform dargestellt. Gemäß der vorliegenden Ausführungsform wird der Aufbereitungsanlage jedoch kein Schleifstaub zugeführt, der in einer vorrangigen Bearbeitung entsteht. Vielmehr wird die Aufbereitungsanlage mit Holzspänen, Schleifstaub, Holzresten und Ähnlichem auf anderweitige Weise beschickt.

Beispielsweise können in einer nebengeordneten Fertigungsstraße Schleifstaub, Holzspäne, Holzreste oder Ähnliches entstehen, die der Vorrichtung 4' in dieser zweiten Ausführungsform zugeführt werden sollen. Alternativ oder zusätzlich kann eine manuelle Beschickung vorgesehen sein. Die Vorrichtung 4' umfasst eine Werkstückauflage 4a, die als Förderband zum Bewegen der Werkstücke, als Linearförderer, beispielsweise als Ketten- oder Riemenförderer, oder im Falle einer Werkstückauflage im Bereich der Stationärtechnik auch als Klemmeinrichtung zum stationären Halten von Werkstücken vorgesehen sein kann. Besonders geeignet sind beispielsweise Saugspanner oder Klemmspanner.

Zunächst wird im Bereich einer ersten Bearbeitungsstation, die die Auftragseinheit 12c umfasst, ein Bauteil B mit oder ohne Trägerplatte (siehe hierzu auch die erste Ausführungsform) ausgebildet, indem über die Auftragseinheit 12c Holzmaterial zugeführt wird. Dieses wird schichtweise aufgebaut, bis ein Bauteil B mit dreidimensionaler Struktur entsteht.

Anschließend wird das Bauteil B mittels des Förderbandes 4a in den Bereich eines Bearbeitungswerkzeuges 16 verfahren, das ein spanabtragendes Bearbeitungswerkzeug, insbesondere einen Fräser, ist. Das Bearbeitungswerkzeug 16 ist in der vorliegenden Ausführungsform entlang einer linearen Führung an einem Ständer 15 bewegbar, welcher Ständer 15 in Portalbauweise in vertikaler Richtung oberhalb der Werkzeugaufnahmefläche 4a am Maschinenbett der Vorrichtung 4' angebracht ist, und ggf. entlang der Vorrichtung 4' verfahrbar ist.

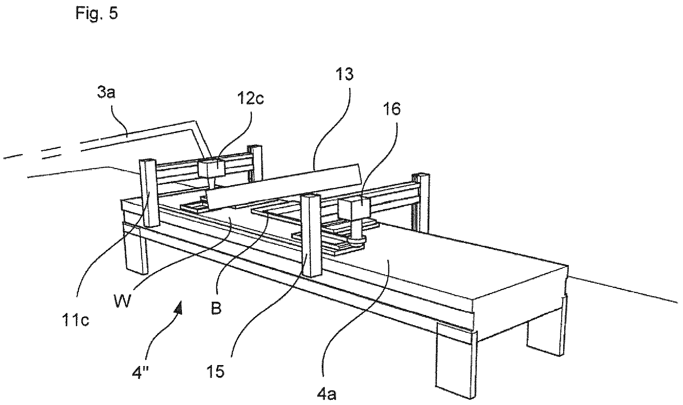

In Fig. 5 ist eine Modifikation der in Fig. 4 dargestellten Ausführungsform abgebildet. Gemäß dieser Ausführungsform ist an der Vorrichtung 4' zwischen dem Ständer 11c mit der Auftragseinheit 12c und dem Ständer 15 mit dem Bearbeitungswerkzeug 16 ein Veredelungsaggregat 13 vorgesehen, welches dazu dient, die mittels der Auftragseinheit 12c ausgebildete dreidimensionale Struktur auszuhärten und/oder zu veredeln. Dies kann beispielsweise durch Wärmeeintrag oder eine UV-Leuchte geschehen. Auch ist ein Veredelungsaggregat denkbar, das im Sinne einer Prägeplatte Druck auf Abschnitte des mittels der Auftragseinheit 12c ausgebildeten Bauteils B und/oder dem das Bauteil B aufnehmenden Werkstück W aufbringt.

Ein Veredeln der mittels der Auftragseinheit 12c hergestellten Werkstücke kann durch Auftragen einer Flüssigkeit erfolgen. Dabei kann die aufgetragene Flüssigkeit eine Schicht an den Werkstücken ausbilden, oder in die ausgebildeten Werkstücke eindringen und Poren dieser Werkstücke verschließen.

Geeignete Vorrichtungen zum Veredeln von Werkstücken sind ferner ausgewählt aus dem Kantenanleimen, Extrudieren und Beschichten, Kaschieren, Reinigen, Entfetten, Verbessern der Haftungs- und Benetzungseigenschaften und Vermindern der elektrostatischen Aufladung. Dabei kann es sich auch um Bearbeitungsarten handeln, die zum Vorbereiten und/oder Nachbehandeln der Werkstücke zum Bedrucken dieser geeignet sind.

Ferner sind ein Schleifen und Aufrauen, ein Grundieren, eine Corona-Behandlung, eine Plasma-Behandlung, eine Beflammungsbehandlung und ein Aufbringen von Haftvermittlern sowie eine Heißluft- bzw. Heißgasbehandlung zu nennen.

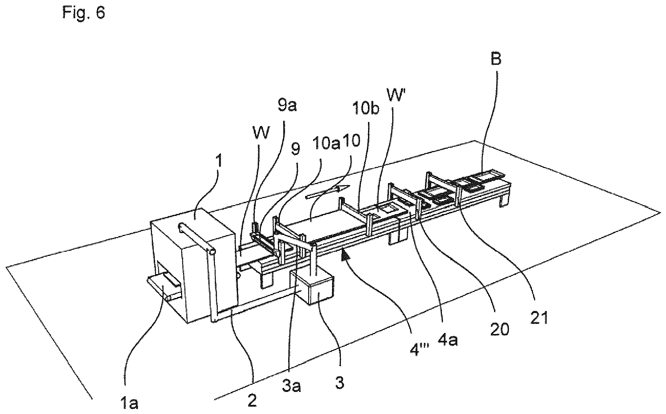

Fig. 6 ist eine perspektivische Ansicht einer Fertigungsstraße, die eine Schleifmaschine 1 sowie eine Vorrichtung zum Ausbilden von Volumenkörpern gemäß einer dritten Ausführungsform der vorliegenden Erfindung umfasst. Die Durchlaufrichtung ist in Fig. 6 durch einen Pfeil angedeutet.

Zunächst befindet sich an der Beschickungsseite der Fertigungsstraße eine Schleifmaschine 1, in die über ein Förderband 1a ein Werkstück W eingebracht werden kann. Die Schleifmaschine 1 führt eine Schleifbearbeitung an der Ober- und/oder Unterseite des Werkstücks W durch. Bei der abrasiven Bearbeitung des Werkstücks W entsteht Schleifstaub, der über eine Absaugvorrichtung vom Werkstück bzw. vom Schleifband entfernt wird.

In Durchlaufrichtung nach der Schleifmaschine 1 befindet sich eine Vorrichtung 4''' zur Ausbildung von Volumenkörpern, deren Werkstückaufnahmefläche 4a, insbesondere ein Förderband, in der gleichen, horizontal ausgerichteten Ebene verläuft wie das Förderband 1a der Schleifmaschine 1. Die Vorrichtung 4 umfasst eine an einem Ständer 9a aufgenommene Auftragseinheit 9, welche - wie später detaillierter beschrieben - zur Ausbildung der Volumenkörper verwendet wird, sowie eine mittels Ständern 10a, 10b in Portalbauweise gehalterte Prägeplatte 10 und nachgeordnete Nachbearbeitungsstationen 11a, 11b.

Auch wenn die in der vorliegenden Ausführungsform dargestellten Ständer 9a, 10a, 10b und Nachbearbeitungsstationen 11a, 11b in Portalbauweise ausgeführt sind, ist ersichtlich, dass diese auch als Ausleger ausgeführt sein können.

In Fig. 6 ist ein Absaugkanal 2 dargestellt, der den durch die Absaugvorrichtung der Schleifmaschine 1 abgesaugten Schleifstaub einer Aufbereitungsanlage 3 (Speichereinrichtung) zuführt. Die neben der Fertigungsstraße angeordnete Aufbereitungsanlage 3 dient dabei als Zwischenspeicher für den Schleifstaub, und kann Einrichtungen umfassen, mit denen der Schleifstaub aufbereitet wird.

Details einer solchen Aufbereitungsanlage wurden bereits im Zuge der Beschreibung der ersten Ausführungsform erläutert. Um Wiederholungen zu vermeiden wird deshalb auf die obigen Erläuterungen verwiesen. In der vorliegenden Ausführungsform wird der in der Aufbereitungsanlage befindliche Schleifstaub der Auftragseinheit 9 zugeführt.

Der Ständer 9a der Auftragseinheit 9 ist in der vorliegenden Ausführungsform in Portalbauweise ausgeführt, und gemäß einer Modifikation der dritten Ausführungsform entlang der Förderrichtung (siehe Pfeil in Fig. 6) bewegbar. Mit der Auftragseinheit 9 wird das Holzmaterial als Material für den Volumenkörper auf eine in der Schleifmaschine 1 bearbeitetes Werkstück W, welches als Träger dient, aufgebracht. Der Auftrag erfolgt linienförmig über die gesamte Breite des Werkstücks W. Anschließend wird das mittels der Auftragseinheit 9 durch eine dreidimensionale Struktur ergänzte Werkstück W' in der Durchlaufrichtung auf einem Förderband 4a der Vorrichtung 4 bewegt, und gelangt hierbei in den Bereich der Prägeplatte 10. Die Prägeplatte 10 ist austauschbar in der Vorrichtung 4 vorgesehen, und hat an der zum Förderband 4a weisenden Seite ein Negativmuster einer Struktur, die am Werkstück W' aufzubringen ist.

Die Prägeplatte 10 ist in vertikaler Richtung oberhalb des Förderbands 4a an der Vorrichtung 4 aufgenommen, und in vertikaler Richtung bewegbar. Mit der Prägeplatte 10 kann das Werkstück W' derart bearbeitet werden, dass durch Aufbringen von Druck, ggf. in Kombination mit einem Wärmeeintrag, auf die zuvor mit dem Holzmaterial versehene Seite des Werkstücks W' mit einer entsprechenden Form der Prägeplatte 10 eine dreidimensionale Struktur in das Werkstück W' eingebracht wird.

Nachfolgend sind in Förderrichtung der Vorrichtung die Nachbearbeitungsstationen 20, 21 vorgesehen, um am Werkstück W' eingebrachte Strukturen zu vereinzeln und somit Bauteile B aus dem Werkstück W' auszuschneiden. Auch können weitere Nachbearbeitungsschritte vorgesehen sein, um mit einem Fräser Radien, Neigungsflächen, oder Freiformflächen in die Bauteile B einzubringen.

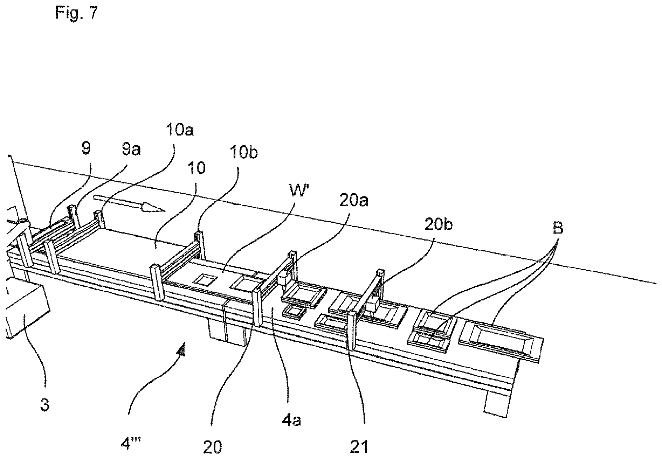

Zur Durchführung der genannten oder auch anderer Arbeitsschritte umfassen die in Portalbauweise ausgeführten Nachbearbeitungsstationen Bearbeitungswerkzeuge 20a, 20b. In der Fig. 7 gezeigten Darstellung der dritten Ausführungsform der vorliegenden Erfindung umfassen die Nachbearbeitungsstationen 20, 21 zwei spanend-bearbeitende Werkzeuge, insbesondere Fräser. Durch die redundant vorgesehenen Bearbeitungsstationen ist es möglich, großflächige Werkstücke mittels beider Nachbearbeitungsstationen 20, 21 gleichzeitig zu bearbeiten, oder alternativ unterschiedliche Werkzeuge zur Bearbeitung der Werkstücke W' bereitzustellen. Auch ist es möglich, dass die in Durchlaufrichtung vorrangig angeordnete Bearbeitungsstation 20 ein Heraustrennen der Bauteile aus dem Werkstück W' bewerkstelligt, während die weitere Nachbearbeitungsstation 21 Außenkanten der herausgetrennten Bauteile bearbeitet.

In einer Modifikation der beschriebenen Ausführungsform ist eine der Nachbearbeitungsstationen 20, 21 mit einem Bearbeitungswerkzeug in Form einer Inkjet-Druckeinrichtung ausgestattet, mit der die zuvor ausgebildeten Strukturen an den Bauteilen B, die ggf. ferner nachbearbeitet wurden, mit einer abschließenden Oberfläche versehen werden. Dieses Bearbeitungswerkzeug in Form einer Inkjet-Druckeinrichtung ist mit schwenkbaren sowie translatorisch verfahrbaren Inkjetdruckdüsen vorgesehen, um die zuvor eingebrachten Konturen variabel bedrucken bzw. mit einem Lack versehen zu können.

Eine Inkjet-Druckeinrichtung ist eine Tintendruckeinrichtung, bei der Tintentropfen nach dem Drop-on-Demand-Verfahren ausgestoßen werden. Bei derartigen Druckeinrichtungen kommen häufig Druckköpfe zum Einsatz, die piezoelektrische Elemente aufweisen oder thermisch arbeiten.

In weiteren Modifikationen können auch eine oder mehrere andere Druck- und Beschichtungseinrichtungen zum Einsatz kommen, wie beispielsweise eine Laserdruckeinrichtung, eine Thermodruckeinrichtung, oder eine Lackauftragseinrichtungen.

Zwar ist es bei der ersten Ausführungsform (Figuren 1-3) vorgesehen, dass zwei ähnliche Auftragseinheiten 12a, 12b vorgesehen sind. Im Rahmen einer weiteren Variante der ersten Ausführungsform kann jedoch eine der Auftragseinheiten mit einem anderen Material beschickt werden als die andere Auftragseinheit. Rein beispielhaft wird erwähnt, dass eine der Auftragseinheiten mit einem Holzmaterial eine dreidimensionale Struktur (Bauteil B) am Werkstück W ausbilden kann, wohingegen eine weitere Auftragseinheit Scharniere oder Ähnliches am Bauteil B oder am Werkstück W ausbildet.

Obwohl in der ersten und dritten Ausführungsform eine Schleifmaschine 1 an der Beschickungsseite einer Förderstraße vorgesehen ist, kann auch eine Maschine mit Fräswerkzeugen oder anderen, spanabtragenden Werkzeugen vorgesehen sein. Die bei der Bearbeitung der Werkstücke W entstehenden Späne werden in entsprechender Weise der Aufbereitungsanlage 3 zugeführt.

Gemäß der in Fig. 4 dargestellten zweiten Ausführungsform kann es vorgesehen sein, dass ein weiteres spanabtragendes Werkzeug vorgesehen ist, welches ein Ausgangswerkstück bearbeitet. Dieses derart bearbeitete Werkstück wird in einem nachfolgenden Arbeitsgang mit der Auftragseinheit 12c modifiziert, indem eine dreidimensionale Struktur an diesem Werkstück, das im vorliegenden Fall als Trägerwerkstück dient, ausgebildet wird. Im Nachgang kann mittels des auch in Fig. 4 dargestellten spanend-arbeitenden Werkzeugs 16 eine Nachbearbeitung stattfinden, sodass das Bearbeitungswerkzeug 16 als Nachbearbeitungsstation fungiert.

In einer weiteren Modifikation der dargestellten Vorrichtungen 4-4''' ist benachbart hierzu ein Werkzeugmagazin vorgesehen, welches Bearbeitungswerkzeuge aufnimmt. Auch kann durch den Werkzeugwechsler eine Düse der Auftragseinheit 9a, 12a-12c aufgenommen und durch eine geeignete Einrichtung in diese eingewechselt werden. Auf diese Weise ist es möglich, die Auftragseinheit je nach konkreter Anforderung zu modifizieren.

Auch ist es möglich, dass die Auftragseinheit selbst austauschbar wird, beispielsweise indem diese in eine Spindeleinrichtung einwechselbar ist.

Eine derartige einwechselbare Auftragseinheit weist ferner Übertragungsmittel auf, die mit einer Schnittstelle der jeweiligen Aufnahmeeinheit kommunizieren können. Auf diese Weise ist es nicht erforderlich, die einwechselbare Auftragseinheit über Kabel, Schleifkontakte, Schläuche oder dergleichen anzubinden. Dies vereinfacht die Konstruktion radikal. Die Übertragungsmittel sollen dafür eingerichtet sein, zumindest Daten und/oder Energie und/oder Holzmaterial von den Übertragungsmitteln zu empfangen.

Gemäß einer weiteren Modifikation der in den Figuren 1-7 dargestellten Ausführungsformen ist es vorgesehen, dass anstatt einer stationären Aufbereitungsanlage 3 ein Holzmaterialvorrat im Bereich der Auftragseinheit 9, 12a-12c vorgesehen ist, welcher Holzmaterial für konkrete Bearbeitungsschritte aufnimmt. Somit ist eine Anbindung der Auftragseinheit an eine Aufbereitungsanlage gemäß dieser Modifikation nicht erforderlich.

In einer weiteren Variante gemäß der vorliegenden Erfindung ist der Auftragseinheit 9, 12a-12c ein Vorbehandlungsmodul zugeordnet, mit dem ein Werkstück W, das als Trägerwerkstück dient, einem oder mehreren Vorbehandlungsschritten unterworfen wird, die ausgewählt sind aus einem Vorreinigen, einem Entfetten, einem Verbessern der Haftungs- und Benetzungseigenschaften und Vermindern der elektrischen Aufladung. Im Rahmen des Vorreinigens kann es vorgesehen sein, teilweise loses Deckmaterial am Werkstück W zu entfernen, und auf diese Weise die mit dem dreidimensionalen Volumenkörper zu versehende Seite des Werkstücks W aufzubereiten, dass das von der Auftragseinheit 9, 12a-12c aufgetragene Material gut anhaftet. Auf diese Weise ist es möglich, Werkstücke mit hoher Dauerhaftigkeit und hervorragendem optischen Äußeren herzustellen.

Dabei kann es gemäß einer Weiterbildung vorgesehen sein, dass die durch das Vorbehandlungsmodul durchzuführenden Arbeitsschritte in Abhängigkeit des mit dem dreidimensionalen Volumenkörper zu versehenden Abschnitts ausgewählt werden. Somit ist es möglich, einzelne Vorbehandlungsschritte durchzuführen, die bei der konkret vorliegenden Situation zu einer Verbesserung der Werkstückgüte führen. Die Auswahl der konkreten Vorbehandlungsschritte kann manuell oder basierend auf einer elektronischen Erfassung der Oberfläche des jeweiligen Werkstücks durch einen Sensor, wie einem photooptischen Sensor erfolgen.

Auch wenn die im Rahmen der zuvor genannten Ausführungsformen beschriebenen Vorrichtungen 4-4''' bevorzugt als Durchlaufmaschinen ausgeführt sind, bei denen Werkstücke mittels eines Förderbands bewegt und an den zuvor beschriebenen Aggregaten und Einrichtungen vorbeigeführt werden, kann die vorliegende Erfindung auch bei sogenannten Stationärmaschinen zum Einsatz kommen, bei denen die Werkstücke W oder auch die Bauteile B über Werkstückhalter festgelegt werden, während die beschriebenen Aggregate und Einrichtungen relativ hierzu bewegt werden. Ferner kann die vorliegende Erfindung bei einer Maschine zum Einsatz kommen, bei der Werkstücke/Bauteile schrittweise gefördert werden. Hierbei wird das Werkstück bei einer Bearbeitung, beispielsweise mit einer Auftragseinheit oder einem Bearbeitungswerkzeug, gehalten, während die Auftragseinheit oder das Bearbeitungswerkzeug relativ hierzu bewegt wird, und das Werkstück/Bauteil anschließend weiterbewegt wird. Dieser Vorgang kann am gleichen Werkstück/Bauteil wiederholt werden, oder das Werkstück kann aus der genannten Position herausgefördert werden.

## Patentansprüche

1. Vorrichtung (4-4''') zur Ausbildung von Volumenkörpern, mit:
einem Bearbeitungswerkzeug (16) zur bevorzugt abtragenden Bearbeitung von Werkstücken,
einer Zuführeinrichtung (3a) zur Zuführung eines additiven Werkstoffs, der Holzmaterial, wie Holzschaum, Holzmehl oder Sägespäne umfasst,
einer Auftragseinheit (9, 12a-12c) zum Ausbilden von Volumenkörpern aus dem mittels der Zuführeinrichtung (3a) zugeführten Werkstoff,
wobei die Vorrichtung eine Speichereinrichtung (3) zur Aufnahme des Werkstoffs umfasst, die mit der Zuführeinrichtung (3a) verbunden ist,
wobei die Speichereinrichtung (3) als Aufbereitungsanlage ausgebildet ist, in der der mit der Auftragseinheit (9, 12a-12c) zu verarbeitende, additive Werkstoff für die Verarbeitung aufbereitet und zwischengelagert wird, wobei ein Aufbereiten ein Vermischen zweier Komponenten betrifft,
einer Bearbeitungsmaschine (1), insbesondere einer Schleifmaschine, einer Fräsmaschine oder ähnlichem,
wobei ferner eine Absaugvorrichtung vorgesehen ist, welche bei der Bearbeitung in der Bearbeitungsmaschine (1) anfallendes Material aufnimmt, das der Speichereinrichtung (3) zugeführt wird.

2. Vorrichtung (4-4''') gemäß Anspruch 1, **dadurch gekennzeichnet, dass** die Vorrichtung ferner eine Beschichtungsvorrichtung, insbesondere eine Inkjet-Druckeinrichtung, umfasst, mit der Werkstücke und/oder durch die Auftragseinheit (9, 12c) ausgebildete Formen bedruckt oder mit Lack versehen werden können.

3. Vorrichtung (4-4''') gemäß einem der vorangegangenen Ansprüche, **dadurch gekennzeichnet, dass** die Vorrichtung ferner ein Veredelungsaggregat (13) umfasst, insbesondere eine Heizeinrichtung, einen UV-Strahler, eine Vorrichtung zum Kantenanleimen, Extrudieren und Beschichten, Kaschieren, Reinigen, Entfetten, Verbessern der Haftungs- und Benetzungseigenschaften und Vermindern der elektrostatischen Aufladung.

4. Vorrichtung (4-4''') gemäß einem der vorangegangenen Ansprüche, **dadurch gekennzeichnet, dass** der Auftragseinheit (9, 12a-12c) ein Vorbehandlungsmodul zugeordnet ist, mit dem ein als Trägerwerkstück dienendes Werkstück (W) einem oder mehreren Vorbehandlungsschritten unterzogen wird, wobei das Vorbehandlungsmodul bevorzugt ein oder mehrere Module aufweist, die ausgewählt sind aus einem Vorreinigungsmodul, einem Entfettungsmodul, einem Modul zum Verbessern der Haftungs- und Benetzungseigenschaften sowie einem Modul zum Vermindern der elektrischen Aufladung.

5. Vorrichtung (4-4''') gemäß einem der vorangegangenen Ansprüche, **dadurch gekennzeichnet, dass** die Auftragseinheit (9, 12a-12c) entlang einer insbesondere linearen Führung verfahrbar ist, bevorzugt horizontal und vertikal.

6. Vorrichtung (4-4''') gemäß einem der vorangegangenen Ansprüche, **dadurch gekennzeichnet, dass** die Auftragseinheit (9, 12a-12c) einen Speicher umfasst, der den zu verarbeitenden additiven Werkstoff aufnimmt.

7. Vorrichtung (4-4''') gemäß einem der vorangegangenen Ansprüche, **dadurch gekennzeichnet, dass** die Auftragseinheit (9, 12a-12c) in eine Werkzeugaufnahme, insbesondere aus einem Werkzeugspeicher, einwechselbar ist.

8. Vorrichtung (4-4''') gemäß einem der vorangegangenen Ansprüche, **dadurch gekennzeichnet, dass** das Bearbeitungswerkzeug (16) und die Auftragseinheit (9, 12a-12c) an einem gemeinsamen Schlitten angebracht sind, der entlang der Führung verfahrbar ist.

9. Verfahren zum Ausbilden von Volumenkörpern aus Holzmaterial unter Einsatz einer Vorrichtung (4-4''') gemäß einem der vorangegangenen Ansprüche, bei welchem Verfahren ein Volumenkörper mittels der Auftragseinheit (9, 12a-12c) aus dem Werkstoff ausgebildet wird und mittels des Bearbeitungswerkzeugs eine Bearbeitung durchgeführt wird, wobei die Absaugvorrichtung bei der Bearbeitung in einer Bearbeitungsmaschine (1), insbesondere einer Schleifmaschine, einer Fräsmaschine, oder Ähnlichem, anfallendes Material aufnimmt, das der Speichereinrichtung (3) zugeführt wird.

10. Verfahren gemäß Anspruch 9, bei dem der Volumenkörper an einem bestehenden Werkstück (W) aus insbesondere Holz oder Holzwerkstoffen ausgebildet wird.

11. Verfahren gemäß Anspruch 9 oder 10, **dadurch gekennzeichnet, dass** der Volumenkörper an einer Schmalseite des Werkstücks (W) ausgebildet wird.

## Claims

1. Device (4-4''') for forming three-dimensional objects, comprising:
a machining tool (16) for machining workpieces in a preferably ablative manner,
a feeding apparatus (3a) for feeding an additive material that comprises wood material, such as wood foam, wood flour or sawdust,
an application unit (9, 12a-12c) for forming three-dimensional objects from the material supplied by means of the feeding apparatus (3a),
wherein the device comprises a storage apparatus (3) for receiving the material and connected to the feeding apparatus (3a),
wherein the storage apparatus (3) is designed as a preparation system in which the additive material to be processed by means of the application unit (9, 12a-12c) is prepared for processing and temporarily stored, wherein preparation involves mixing two components,
a machining unit (1), in particular a grinding machine, a milling machine or the like,
wherein a suction device is also provided, which receives material that accumulates during machining in the machining unit, which material is fed to the storage apparatus (3).

2. Device (4-4''') according to claim 1, **characterised in that** the device further comprises a coating device, in particular an inkjet printing apparatus, by means of which workpieces and/or shapes formed by means of the application unit (9, 12c) can be printed on or painted.

3. Device (4-4''') according to any of the preceding claims, **characterised in that** the device further comprises a finishing unit (13), in particular a heating apparatus, a UV lamp, a device for edge banding, extruding and coating, laminating, cleaning, degreasing, improving the adhesive and wetting properties and reducing electrostatic discharge.

4. Device (4-4''') according to any of the preceding claims, **characterised in that** the application unit (9, 12a-12c) is assigned a pretreatment module, by means of which a workpiece (W) serving as a substrate workpiece is subjected to one or more pretreatment steps, wherein the pretreatment module preferably comprises one or more modules selected from a precleaning module, a degreasing module, a module for improving the adhesive and wetting properties and a module for reducing electrical discharge.

5. Device (4-4''') according to any of the preceding claims, **characterised in that** the application unit (9, 12a-12c) can be moved along an, in particular linear, guide, preferably horizontally and vertically.

6. Device (4-4''') according to any of the preceding claims, **characterised in that** the application unit (9, 12a-12c) comprises a store that receives additive material to be processed.

7. Device (4-4''') according to any of the preceding claims, **characterised in that** the application unit (9, 12a-12c) can be substituted into a tool holder, in particular from a tool store.

8. Device (4-4''') according to any of the preceding claims, **characterised in that** the machining tool (16) and the application unit (9, 12a-12c) are mounted on a common slide that can be moved along the guide.

9. Method for forming three-dimensional bodies using a device (4-4''') according to any of the preceding claims, in which method a three-dimensional object is formed from the material by means of the application unit (9, 12a-12c) and machining is carried out by means of the machining tool, wherein the suction device receives material that accumulates during machining in a machining unit (1), in particular a grinding machine, a milling machine or the like, which material is fed to the storage apparatus (3).

10. Method according to claim 9, wherein the three-dimensional object is formed on an existing workpiece (W), in particular from wood or wood materials.

11. Method according to claim 9 or 10, **characterised in that** the three-dimensional object is formed on a narrow side of the workpiece (W).

## Revendications

1. Dispositif (4-4"') pour la réalisation de corps solides, avec :
un outil d'usinage (16) pour le traitement de préférence par enlèvement de copeaux de pièces à usiner,
un appareil d'alimentation (3a) pour l'alimentation d'un matériau additif, du matériau de bois, tel que la mousse de bois, la farine de bois ou des copeaux de bois,
une unité d'application (9, 12a-12c) pour la réalisation de corps solides à partir du matériau alimenté au moyen de l'appareil d'alimentation (3a),
dans lequel le dispositif comporte un appareil accumulateur (3) pour la réception du matériau qui est relié à l'appareil d'alimentation (3a),
dans lequel l'appareil accumulateur (3) est réalisé comme installation de préparation, dans laquelle le matériau additif à traiter avec l'unité d'application (9, 12a-12c) est préparé et est entreposé pour le traitement, dans lequel une préparation concerne un mélange de deux composants,
une machine d'usinage (1), en particulier une meuleuse, une fraiseuse ou similaire,
dans lequel un dispositif d'aspiration est en outre prévu, lequel reçoit du matériau produit lors de l'usinage dans la machine d'usinage (1), lequel est fourni à l'appareil accumulateur (3).

2. Dispositif (4-4''') selon la revendication 1, **caractérisé en ce que** le dispositif comprend en outre un dispositif de revêtement, en particulier un appareil d'impression à jet d'encre, avec lequel des pièces à usiner et/ou des formes réalisées par l'unité d'application (9, 12c) peuvent être imprimées ou pourvues de vernis.

3. Dispositif (4-4''') selon l'une quelconque des revendications précédentes, **caractérisé en ce que** le dispositif comprend en outre un groupe de finition (13), en particulier un appareil de chauffage, un émetteur d'UV, un dispositif d'encollage de chants, d'extrusion et de revêtement, de contrecollage, de nettoyage, de dégraissage, d'amélioration des propriétés d'adhérence et de réticulation et de réduction de la charge électrostatique.

4. Dispositif (4-4''') selon l'une quelconque des revendications précédentes, **caractérisé en ce qu'**un module de prétraitement est associé à l'unité d'application (9, 12a-12c), avec lequel une pièce à usiner (W) servant de pièce à usiner de support est soumise à une ou plusieurs étapes de prétraitement, dans lequel le module de prétraitement présente de préférence un ou plusieurs modules qui sont sélectionnés à partir d'un module de prénettoyage, un module de dégraissage, un module d'amélioration des propriétés d'adhérence et de réticulation ainsi qu'un module de réduction de la charge électrique.

5. Dispositif (4-4''') selon l'une quelconque des revendications précédentes, **caractérisé en ce que** l'unité d'application (9, 12a-12c) est déplaçable le long d'un guidage en particulier linéaire, de préférence horizontalement et verticalement.

6. Dispositif (4-4''') selon l'une quelconque des revendications précédentes, **caractérisé en ce que** l'unité d'application (9, 12a-12c) comprend un accumulateur qui reçoit le matériau additif à traiter.

7. Dispositif (4-4''') selon l'une quelconque des revendications précédentes, **caractérisé en ce que** l'unité d'application (9, 12a-12c) est interchangeable dans un logement d'outil, en particulier à partir d'un accumulateur d'outil.

8. Dispositif (4-4''') selon l'une quelconque des revendications précédentes, **caractérisé en ce que** l'outil d'usinage (16) et l'unité d'application (9, 12a-12c) sont montés au niveau d'un chariot commun, qui est déplaçable le long du guidage.

9. Procédé de réalisation de corps solides à partir de matériau de bois en utilisant un dispositif (4-4''') selon l'une quelconque des revendications précédentes, pour lequel procédé un corps solide est réalisé au moyen de l'unité d'application (9, 12a-12c) à partir du matériau et un usinage est réalisé au moyen de l'outil d'usinage, dans lequel le dispositif d'aspiration reçoit du matériau produit lors de l'usinage dans une machine d'usinage (1), en particulier une meuleuse, une fraiseuse, ou similaire, lequel est fourni à l'appareil accumulateur (3).

10. Procédé selon la revendication 9, pour lequel le corps solide est réalisé au niveau d'une pièce à usiner (W) existante en particulier à partir de bois ou de matériaux dérivés du bois.

11. Procédé selon la revendication 9 ou 10, pour lequel le corps solide est réalisé au niveau d'un côté étroit de la pièce à usiner (W).
